**Europäisches Patentamt**

**European Patent Office**

**Office européen des brevets**

(19)

(11) Publication number : **0 502 837 A1**

# (12) EUROPEAN PATENT APPLICATION

(21) Application number : **92850051.1**

(22) Date of filing : **06.03.92**

(51) Int. Cl.⁵ : **G01N 19/08, G01N 21/91, G01M 3/20, H01M 2/32**

(30) Priority : **06.03.91 SE 9100660**

(43) Date of publication of application :
**09.09.92 Bulletin 92/37**

(84) Designated Contracting States :
**BE DE DK ES FR GB IT NL PT**

(71) Applicant : **VARTA BATTERI AKTIEBOLAG**
**P.O. Box 5317**
**S-102 42 Stockholm (SE)**

(72) Inventor : **Hakulinen, Martti**
**Lindvägen 8**
**S-577 32 Hultsfred (SE)**
Inventor : **Stenbäck, Sören**
**Remstigen 11**
**S-577 36 Hultsfred (SE)**

(74) Representative : **Sundström, Per Olof**
**Stenhagen Patentbyra AB P.O. Box 17709**
**S-118 93 Stockholm (SE)**

(54) **Process of detecting defects in solid coating layers.**

(57)   For the purpose of detecting cracks, cavities or pores in a lead covering moulded onto a copper conductor, the lead-covered conductor is lowered into a wet-type isostatic press in which the pressure medium consists of a penetration liquid, wherein the press is placed under pressure so as to force the penetration liquid into the defects. Surface liquid is removed from the pressure-treated conductor and the defects are indicated by the penetration liquid which seeps or "sweats" from the conductor. This indication of defects may be amplified, by applying a development liquid to the dry outer surfaces of the conductor. The pressure of the penetration liquid is preferably higher than the yield point of the protective covering, and is at least about 2000 bars in the case of lead protective coverings.

EP 0 502 837 A1

Jouve, 18, rue Saint-Denis, 75001 PARIS

The present invention relates to a method for detecting such defects as cracks, cavities, pores and the like in a solid protective covering on a body, as defined in the preamble of the following method claim.

In the case of battery cells that are intended for specific purposes, for instance for use in submarines and corresponding vessels, the cells are required to have a low internal resistance, and to this end the cell poles and current conductors are manufactured from a material which possesses good electrical conductivity. In practice, the material used is copper, because of its high electrical conductivity and relatively low price. At times, it is necessary to provide the pole or terminal bolts of the battery and also the so-called pole yokes, which mutually connect the battery plates with water cooling channels. The battery electrolyte, sulphuric acid, attacks copper, however, and it is well known to cover the copper components with a protective covering layer of material, in practice with a lead covering.

It is essential that this lead covering is free from pores and cracks and other defects that are capable of jeopardizing the imperviousness of the lead covering. If the acid is able to penetrate through defects in the protective covering and able to come into contact with the copper components, the cell is said to be copper "poisoned" and from a safety aspect it is unacceptable that parts of the pole yokes and pole bolts may become excessively corroded and therewith eaten away.

The methods of applying solid lead coverings which are acceptable industrially, however, cannot be carried out in a troublefree manner, i.e. in a manner which will ensure that the lead covering is totally free from defects of the aforesaid kind.
The method used at present to apply lead coverings on copper components, involves moulding a lead covering around said components. According to this known method, a copper component is first preheated and then introduced into a mould into which a lead is introduced, so as to form a covering around said component.

The lead coated component must then be tested for possible defects. The most common testing method used at present involves an ultrasonic detection process, which enables the presence of enclosed cavities to be detected, in addition to the presence of cracks and pores. Ultrasonic testing, however, places high demands on the skill of the personnel involved, and is still, nevertheless, unreliable. Furthermore, ultrasonic testing is highly time consuming, resulting in high costs.

Those defects that are detected can be repaired or sealed-off, which according to one known technique is effected by flaming with gaseous hydrogen.

One object of the present invention is to provide a method for testing solid protective coverings with the intention of indicating defects of the aforesaid kind, said object primarily being to provide a method for testing the solid lead coverings on the copper components of battery cells and for indicating any defects that may be present in said covering.

This object is achieved with the method set forth in the following Claim 1.

Preferred embodiments of the inventive method are set forth in the dependent claims.

When applying the inventive method, the object provided with said protective covering is lowered into a penetration liquid which is pressurized at a pressure which exceeds the yield point of the protective layer, so that any enclosed cavities will be pressed together or collapsed, thereby enabling said cavities to be detected in the form of recesses or shallows that form in the surface of the protective covering as a result of such collapse, and so that the liquid will also be forced into very fine cracks and tiny pores present in said covering.

The penetration liquid will then be "sweated out", thereby indicating the defects. The penetration liquid may optionally be absorbed by a developing liquid.

According to one embodiment of the invention, a developing liquid may be applied to the object subsequent to having ensured that the external surfaces of said object are free from penetration liquid, said developing liquid sucking penetration liquid from the defects onto the dry outer surface of the covering and thereby clearly indicate the presence and location of the defects.

When the protective covering is comprised of lead, the penetration liquid may be pressurized to a pressure of about 2000 bars, so as to definitely ensure that all defects will be detected. Although it is, of course, possible to pressurize the liquid to higher pressures. The application of higher pressures has not been found economically viable, however, with respect to the accuracy of the test carried out.

Although the invention has been described in the aforegoing with reference to battery cells, particularly battery cells or accumulators that are intended for submarines, wherein it is necessary to cover the copper conductors with a lead covering which is free from defects, so as to prevent contact between the sulphuric acid and the copper components, it will be understood that the invention can be applied generally when wishing to detect the possible presence of defects in a solid protective covering or coating on an object, particularly defects in a ductile material, such as metal.

EXAMPLE

Lead-covered copper components were lowered into a press cylinder forming part of an isostatic press having a wet pressure chamber whose pressure medium comprised a penetration liquid. The penetration liquid used was water.

An isostatic pressing operation was carried out, in which the pressure medium was pressurized to 2000 bars. Upon completion of the pressing operation, the lead-covered copper component was lifted from the press cylinder and penetration liquid that had not penetrated into the lead covering was removed from the surface thereof. A developing liquid was then applied to the lead-covered copper component. The developing liquid sucked penetrating liquid from cracks and pores onto the dried surface of the covering, therewith clearly indicating the presence of said cracks and pores. Hidden cavities had been collapsed and could be detected in the form of corresponding recesses or shallows in the surface of the lead covering.

Penetration liquid and development liquid were chosen in accordance with industrial standards, for example SIS 114501 "Testing with penetrants".

per conductor intended for a battery cell.

## Claims

1. A method for detecting defects such as cracks, cavities, pores and the like in a solid protective covering on an object, comprising surrounding the protected object with a penetrating liquid and then drying the protected object so as to remove surface liquid therefrom, wherein the presence of defects in the protective covering is indicated by penetrating liquid seeping - from the defects and on to the surface of said object, **characterized** by pressurizing the penetrating liquid to a pressure which exceeds the yield point of the protective covering, thereby collapsing cavities or voids enclosed in said covering, the presence of such cavities or voids being manifested in the form of recesses or shallows that form in the outer surfaces of the protective covering.

2. A method according to Claim 1, **characterized** by freeing the external surfaces of the object of penetrating liquid and applying to the thus freed surfaces a developing liquid which functions to suck penetrating liquid from said defects and thereby indicate the presence thereof.

3. A method according to Claim 1 or 2, **characterized** in that the protective covering is a lead covering; and in that the penetration liquid is pressurized to a pressure of at least about 2000 bars.

4. A method according to Claim 3, **characterized** by pressurizing the liquid to a pressure of about 2000 bars.

5. A method according to Claim 3 or 4, **characterized** in that said object is a lead-covered cop-

| | European Patent Office | EUROPEAN SEARCH REPORT | Application Number |
|---|---|---|---|

## DOCUMENTS CONSIDERED TO BE RELEVANT

EP 92850051.1

| Category | Citation of document with indication, where appropriate, of relevant passages | Relevant to claim | CLASSIFICATION OF THE APPLICATION (Int. Cl.5) |
|---|---|---|---|
| Y | SOVIET INVENTIONS ILLUSTRATED, EL section, week 8815, May 25, 1988 DERWENT PUBLICATIONS LTD., London, S 02 page 24 * SU-1337 697 (PHYS CHEM INST (PATM VYSK)) * -- | 1,2 | G 01 N 19/08 G 01 N 21/91 G 01 M 3/20 H 01 M 2/32 |
| Y | GB - A - 2 038 676 (GENERAL ELECTRIC) * Page 1, lines 13-29 * -- | 1,2 | |
| A | SOVIET INVENTIONS ILLUSTRATED, EL section, week E 09, April 14, 1982 DERWENT PUBLICATIONS LTD., London, S 03 S 02 page 15 * SU-832 411 (KASAEV K S ) * -- | 1 | |
| Y | DE - A - 2 635 483 (ROCKWELL) * Page 6, lines 4-24 * -- | 2 | TECHNICAL FIELDS SEARCHED (Int. Cl.5) G 01 N G 01 M H 01 M C 22 F |
| A | DE - B - 2 237 656 (VARTA) * Totality * ---- | 5 | |

The present search report has been drawn up for all claims

| Place of search | Date of completion of the search | Examiner |
|---|---|---|
| VIENNA | 21-05-1992 | NARDAI |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)